# FASCICULE DE BREVET EUROPEEN

(11) **EP 1 313 612 B1**
(45) Date de publication et mention de la délivrance du brevet: **10.01.2007**
(21) Numéro de dépôt: 01965357.5
(22) Date de dépôt: 27.08.2001
(51) Int. Cl.: B32B 27/00, F17C 1/16

(54) **STRUCTURE MULTICOUCHE THERMOPLASTIQUE POUR RESERVOIR A GAZ**
Thermoplastische Mehrschichtstruktur für Gasbehälter
MULITLAYER THERMOPLASTIC STRUCTURE FOR GAS TANK

(30) Priorité: 30.08.2000 FR 0011073
(43) Date de publication de la demande: 28.05.2003
(73) Titulaire: COMMISSARIAT A L'ENERGIE ATOMIQUE, 75015 Paris (FR)
(72) Inventeur: JOUSSE, Franck, F-37000 Tours (FR); MAZABRAUD, Philippe, F-45000 Orléans (FR); ICARD, Béatrice, F-38570 Tencin (FR)
(74) Mandataire: Audier, Philippe André
(86) Numéro de dépôt international: PCT/FR2001/002675
(87) Numéro de publication internationale: WO 2002/018135

(56) Documents cités:
- EP-A- 0 230 344
- EP-A- 0 514 548
- FR-A- 2 733 296
- US-A- 5 230 935
- US-A- 5 869 573
- US-A- 6 033 749
- H.-G. Elias *a F. Vohwinkel: *dNeue polymere Werkstoffe für die industrielle Anwendung, 2. Folge*d; Carl Hanser Verlag, München (DE); p. 38-42 (1983)
- Encyclopedia of Polymer Science and Engineering, tôme 14 (1988); John Wiley *a Sons, New York (US); p. 659-670
- J.-P. Trotignon, J. Verdu, A. Dobracginsky et M. Piperaud: *dMatières Plastiques. structures-propriétés, mise-en-oevre, normalisation*d; Editions Nathan, Paris (FR); p. 22, 23 (1996)
- *dOREVAC 18350*d, brochure de ELF-ATOCHEM, Edition du 03/98
- *dRAY-RAN POLYTEST*d; manuelle de RAY-RAN Ltd.
- *dLE ROTOMOULAGE DES PIECES CREUSES EN MATIERES PLASTIQUES: UNE TECHNIQUE ECONOMIQUE POUR LES PRODUCTIONS DE PETITES SERIES*d; Etude de procédé, décembre 1999
- J.-P. Trotignon, J. Verdu, A. Dobracginsky et M. Piperaud: *dPrécis de matières plastiques. structures-propriétés, mise-en-oevre, normalisation*d; 5e édition; Editions Nathan, Paris (FR); p. 122-125
- Elias H.G.; Vohwinkel F.: 'Neue polymere Werkstoffe für die industrielle Anwendung, 2. Folge', Carl Hanser Verlag, München (DE); p. 38-42 (1983)
- Trotignon J.P.; Verdu J.; Dobracginsky A.; Piperaud M.: 'Matières Plastiques. structures-propriétés, mise-en-oevre, normalisation', Editions Nathan, Paris (FR); p. 22-23 (1996)
- Trotignon J.P.; Verdu J.; Dobracginsky A.; Piperaud M.: 'Précis de matières plastiques. structures-propriétés, mise-en-oevre, normalisation', 5e édition, Editions Nathan, Paris (FR); p. 122-125
- B. CARLOWITZ: "Kunststofftabellen, 4me éd." 1995, CARL HANSER VERLAG , MÜNCHEN (DE) * page 24 - page 25 *
- "D 1238-01" 2002, ASTM
- "Recherche Documentaire-étude de procédé, chap. II) Le rotomoulage, d'une matière première à une produit fini de qualité" décembre 1999 (1999-12),

## Description

### Domaine technique

La présente invention se rapporte à une structure thermoplastique multicouches, à l'utilisation de ladite structure pour la fabrication d'un réservoir et à un réservoir comprenant ladite structure.

La présente invention se rapporte notamment à une structure multicouches de révolution telle qu'un réservoir, sans soudure, en matière(s) plastique(s) destinée notamment au stockage de solvants, de gaz sous pression tels que de l'hydrogène, de l'oxygène, des hydrocarbures, etc.

### Etat de la technique antérieure

Actuellement, dans l'exemple d'application pour le stockage sous pression de gaz, la majorité des réservoirs utilisés sont soit entièrement métalliques, soit composés d'une vessie en alliage aluminium étanche sur laquelle est parfois bobiné un composite carbone/résine jouant le rôle de renfort mécanique vis-à-vis des fortes pressions, soit d'une vessie en matériau thermoplastique sur laquelle est parfois bobiné un composite carbone/résine jouant le rôle de renfort mécanique vis-à-vis des fortes pressions.

Le premier type de réservoirs présente les inconvénients liés au problème de leur poids et de la corrosion du métal.

Le deuxième type de réservoir présente des inconvénients lors de la mise en oeuvre des vessies étanches d'aluminium. En effet elle fait appel à des technologiques onéreuses telles que le fluotournage. De plus, la fragilisation de l'aluminium notamment par corrosion en présence de gaz hydrogène sous contrainte est très gênante car elle raccourcie la durée de vie du réservoir.

Pour le troisième type de réservoirs, les vessies thermoplastiques utilisées aujourd'hui sont essentiellement des polyéthylènes réticulés chimiquement ou non, des polypropylènes, des polybutadiènes téréphtalates, des polyéthylènes téréphtalates, des polyamides, tels que le Nylon 6 ou 11, ou des mélanges de polypropylène et de polybutène ou autre. Ces réservoirs qui comportent une vessie thermoplastique ne sont pas forcément destinés au stockage de gaz perméants, tels que des gaz autres que l'air comprimé, notamment à forte pression, et leur taux de fuite reste trop important pour des gaz tels que l'hydrogène. Les protocoles de fabrication actuels utilisent essentiellement comme matériaux, outre les matériaux précités, des polyéthylènes, des polychlorures de vinyle, des polyuréthanes, des copolymères acétate de vinyle, et des polystyrènes. Ces protocoles, et notamment le rotomoulage, préconisent l'utilisation de grades de ces polymères thermoplastiques assez peu visqueux ayant une densité comprise entre 0,924 et 0,939 et un indice de fluidité compris entre 3 et 9 g/10 minutes. Le grade est une appellation commerciale : pour un polymère, il peut y avoir plusieurs grades commerciaux, c'est à dire avec une cristallinité différente ou des masses différentes ou des longueurs de chaîne différentes etc.

Par exemple le rotomoulage de multicouches dans l'industrie concerne essentiellement des structures du type polyéthylène/polyéthylène ou polyéthylène/mousse de polyuréthane/polyéthylène. Des thermoplastiques plus techniques et notamment ceux de la famille des copolymères éthylène-alcool vinylique n'ont jamais été utilisés. Ce dernier copolymère a en fait été mis en oeuvre par injection ou extrusion pour des applications dans l'emballage dans l'alimentaire ou les cosmétiques. Dans ces applications, ils ont été utilisés en faibles épaisseurs, inférieures à 500 µm.

Par ailleurs, les technologies de mise en oeuvre des réservoirs de l'art antérieur nécessitent des soudures pour obtenir des formes de révolution et/ou pour ajouter des inserts, tels que des poignées par exemple, ou des connectiques métalliques, tels que des bouchons ou des capteurs par exemple. Ces soudures rendent les vessies inhomogènes, et augmentent leur taux de fuite.

Il apparaît donc un réel besoin d'une structure permettant de fabriquer des réservoirs plus légers que ceux de l'état de la technique, de diminuer les coûts de fabrication et d'augmenter la durée de vie des réservoirs fabriqués.

En outre, pour des applications de stockage, de type réservoir à gaz par exemple, il est nécessaire d'obtenir des structures de révolution sans soudure et homogènes, présentant des propriétés améliorées de imperméabilité au gaz, de tenue mécanique, de tenue aux irradiations, aux solvants etc....

Le taux de fuite de tels réservoirs doit être diminué pour qu'ils puissent être utilisés par exemple pour le stockage de gaz sous pression, tels que de l'hydrogène.

### Exposé de l'invention

La présente invention a précisément pour but de fournir une structure et un réservoir comprenant ladite structure qui pallient les inconvénients et présente les qualités précités.

La structure de la présente invention est une structure thermoplastique multicouches comprenant au moins une couche constituée d'un copolymère éthylène-alcool vinylique comprenant 29% en mole d'éthylène, ledit copolymère ayant une masse volumique de 1,21 g/cm³ et un indice de fluidité de 4 g/10 minutes à une température de 190°C avec une charge de 2,16 kg, dans laquelle la couche constituée dudit copolymère a une épaisseur comprise entre 0,3 et 20 mm.

Le copolymère éthylène-alcool vinylique sera aussi appelé ci-dessous EVOH.

Selon l'invention, le copolymère éthylène-alcool vinylique peut aussi être défini comme étant de formule (I) suivante: 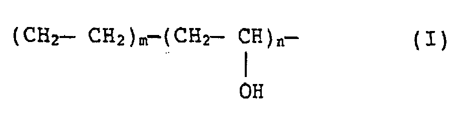 avec m compris entre 10 et 80% en moles dans le polymère, ou encore entre 20 et 80 % en moles.

L'indice de fluidité du copolymère éthylène-alcool vinylique (« Melt Flow Indice ») est déterminé suivant la norme ASTM D 1238-88 au moyen d'un essai effectué sur une machine Kayeness Galaxy 1 (marque de commerce), modèle 7053 DE fabriquée par la société Kayeness Inc., Morgantown, PA 19543. Cet essai consiste à placer une charge de polymère sur un tube placé à une température définie, supérieure à la température de fusion du polymère, et à mesurer la quantité de polymère qui coule durant 30 secondes. Ce temps est ensuite converti en minutes.

Les polymères d'EVOH sont en général disponibles dans le commerce sous forme de granulés ou pastilles. De préférence, les granulés ou pastilles commerciaux de polymères seront préalablement micronisés en une poudre, par exemple à température ambiante ou cryogénique, dont la granulométrie est choisie suivant la nature des polymères et la structure du multicouches envisagé, ayant de préférence une granulométrie inférieure à 0,7 mm, avantageusement comprise entre 0,1 et 0,7 mm. Cette micronisation permet de ne pas trop chauffer l'EVOH par la suite pour le fondre, tout en obtenant une couche homogène.

De plus, le grade d'EVOH choisi selon la présente invention a de préférence un indice de fluidité plus faible, c'est à dire une viscosité plus grande, que ceux des thermoplastiques tels que PE, PVC, PA habituellement utilisés par exemple en rotomoulage. En d'autres termes, selon l'invention, l'EVOH reste très visqueux à l'état fondu pour pouvoir être déposé avec des épaisseurs supérieures à 0,5 millimètre, ce qui va à l'encontre des protocoles habituels, notamment dans le cas du rotomoulage dans lesquels on recherchait des grades assez fluides de thermoplastiques.

Le thermoplastique EVOH absorbe beaucoup d'eau ce qui entraîne une chute de ses propriétés mécaniques, rhéologiques ou barrières aux gaz. Ainsi, les structures multicouches selon la présente invention permettent de protéger l'EVOH vis-à-vis de l'eau au moyen d'autres couches de matériaux thermoplastiques, différents de EVOH et résistants à l'eau. Ceci n'a pas été réalisé dans l'art antérieur car les caractéristiques rhéologiques telles que la viscosité, la fluidité, etc. et physico-chimiques telles que la fusion, la polarité, la température de dégradation, etc. des couches de matériaux thermoplastiques différentes de EVOH utilisées dans l'art antérieur pour le rotomoulage sont parfois très différentes les unes des autres.

La présente invention remédie à ce problème notamment par le choix d'un grade approprié de EVOH qui reste visqueux à l'état fondu ainsi que par le choix de sa température de mise en oeuvre légèrement supérieure à sa température de fusion. Ceci permet d'obtenir une couche d'EVOH épaisse et évite que les couches de matériaux thermoplastiques différentes de EVOH qui lui sont adjacentes se mélangent avec elle, permettant ainsi sa superposition avec d'autres matériaux thermoplastiques.

La présente invention présente en outre l'avantage de pouvoir déposer des multicouches sans être obligé de diminuer la température de l'appareil au fur et à mesure de la mise en oeuvre des couches successives des matériaux thermoplastiques. Ainsi, par exemple, contrairement à l'état de la technique, la température d'une couche interne de thermoplastique, c'est à dire de la dernière couche déposée, peut être supérieure à celle de la couche précédente de matériau thermoplastique sans qu'il y ait interpénétration des couches.

L'EVOH est un polymère qui présente de bonnes propriétés mécaniques et forme une excellente barrière aux gaz. Mais certains gaz tels que l'hélium ou l'hydrogène sont connus pour être très perméants. En outre, leur pression de stockage peut être importante et aller jusqu'à 10⁶ à 10⁸ pascals, ce qui favorise leur perméation. Ces spécifications imposent que la couche barrière EVOH soit épaisse et que les interfaces thermoplastiques/connectiques métalliques soient étanches afin de minimiser le taux de fuite du réservoir. La structure selon l'invention, avec les caractéristiques de EVOH précitées permet précisément et de manière inattendue de réaliser une couche de EVOH suffisamment épaisse pour qu'elle puisse être utilisée pour former un réservoir présentant les qualités requises pour le stockage de tels gaz aux pressions précitées.

EVOH peut avoir tendance à absorber beaucoup d'eau, ce qui entraîne une diminution de ses propriétés notamment barrières aux gaz. C'est pourquoi la couche EVOH sera de préférence mise en oeuvre dans des structures multicouches, afin que des couches de matériaux thermoplastiques de part et d'autre de la couche EVOH la protêgent vis-à-vis de l'eau.

Selon l'invention, la couche constituée dudit copolymère éthylène-alcool vinylique peut avoir une épaisseur supérieure à 0,5 mm, par exemple une épaisseur comprise entre 0,3 et 20 mm, ou encore entre 0,5 et 10 mm, ou encore entre 0,5 et 5 mm. L'épaisseur de la couche de EVOH augmente les propriétés du matériau. Suivant les applications envisagées, elle sera choisie notamment en fonction du coût, du poids, de la tenue mécanique, de la nature du gaz, de la pression de stockage, des conditions de stockage, du taux de fuite admissible etc. désirés.

Selon l'invention, la structure peut comprendre en outre au moins une couche constituée d'un matériau thermoplastique différent dudit copolymère éthylène-alcool vinylique et choisi dans un groupe comprenant un polyéthylène (PE), un polyéthylène greffé (PEG), un polyéthylène téréphtalate (PET), un polypropylène (PP), un polyétheréthercétone (PEEK), un polycarbonate (PC), un copolymère éthylène acétate de vinyle (EVA), un polystyrène (PS), un polyfluorure de vinylidène (PVDF), un polyester amide, un polyamide (PA), un polyarylamide (PAA) ou un mélange de ceux-ci.

Lorsqu'il y a plusieurs couches de matériaux thermoplastiques tels que ceux précités, différents dudit copolymère éthyléne-alcool vinylique, les matériau des différentes couches peuvent être identiques ou différents.

Selon l'invention, la structure peut comprendre par exemple au moins une première et une deuxième couches constituées respectivement d'un premier et d'un deuxième matériaux thermoplastiques identiques ou différents et différents d'un copolymère éthylène-alcool vinylique, choisis par exemple parmi les matériaux précités, ladite structure comprenant successivement la première couche de matériau thermoplastique, la couche constituée du copolymère éthylène-alcool vinylique, et la deuxième couche de matériau thermoplastique.

Par exemple, la première couche peut être constituée de polyamide et la deuxième couche peut être constituée de polyéthylène greffé ou non.

Par exemple aussi, la première et la deuxième couches peuvent être constituées d'un polyamide identique ou différent.

Selon l'invention, chaque couche du matériau thermoplastique différent dudit copolymère éthylène-alcool vinylique peut par exemple avoir une épaisseur comprise entre 0,1 et 10 mm, ou encore entre 0,1 et 5 mm.

Les couches de matériaux thermoplastiques différents du copolymère éthylène-alcool vinylique peuvent aussi participer à la tenue aux chocs de la couche de EVOH, et donc du réservoir formé.

Selon l'invention, la couche constituée d'un matériau thermoplastique différent dudit copolymère éthylène-alcool vinylique peut comprendre dans le matériau thermoplastique qui la constitue une charge organique ou minérale. Cette charge peut être utile par exemple pour améliorer la tenue mécanique, la tenue au vieillissement ou pour faciliter la mise en oeuvre de la structure.

La structure selon l'invention peut être fabriquée par tout procédé permettant un dépôt d'une ou de plusieurs couche(s) successive(s), par exemple par moulage, par projection plasma à froid, par extrusion, par injection, par soufflage, par thermoformage ou par rotomoulage. Dans le cas d'une application de la présente invention pour fabriquer un réservoir haute pression, le procédé de mise en oeuvre utilisé pour la réalisation de celui-ci devra de préférence permettre l'obtention d'une couche en EVOH qui est suffisamment épaisse pour que la structure de la présente invention soit suffisamment étanche aux gaz à forte pression et/ou forte température.

La technique par rotomoulage est une technique qui permet grâce à la présente invention, et de manière inattendue, d'obtenir des multicouches avec une couche de EVOH ayant une épaisseur supérieure à 0,5 millimètre. Elle permet en outre de disposer dans la structure des inserts et/ou connectiques au cours de la mise en oeuvre en fournissant avantageusement un réservoir sans soudures, suffisamment étanche aux gaz sous forte pression et/ou température. Toute autre technique d'obtention de telles vessies convient.

Selon la présente invention la couche d'EVOH peut être mise en oeuvre à une température légèrement supérieure à sa température de fusion, pouvant aller jusqu'à 230/240° C, et avec une épaisseur qui peut être supérieure à 0,5 mm ce qui est original par rapport à l'état de la technique. Ceci permet d'empiler sur la couche d'EVOH des couches thermoplastiques quelles que soient leurs températures de fusion et/ou de mise en oeuvre, alors que l'état de la technique préconisait de diminuer la température de mise en oeuvre des couches suivantes pour éviter l'interpénétration des couches.

Pour assurer une plus grande résistance aux fortes pressions de gaz stockés, la structure thermoplastiques de la présente invention peut être renforcée par un composite de fibres par exemple de carbone ou de silice imprégnées de résine thermodurcissable, par exemple d'époxyde ou phénolique, pouvant par exemple être réticulée thermiquement, ou de thermoplastique tel qu'un alliage ou un polyarylamide. Ce renfort peut être disposé par exemple dans la structure multicouches ou à l'extérieur de celle-ci. Pour cela la vessie peut par exemple servir de mandrin pour le drapage ou le tissage de fils de carbone qui sont alors imprégnés de résine thermodurcissable. L'ensemble peut subit alors un traitement thermique pour provoquer la réticulation de la résine.

Tout autre procédé de renforcement mécanique interne ou externe de la vessie multicouches thermoplastique convient.

La présente invention fourni donc également un réservoir présentant des propriétés de barrière aux gaz et de tenue mécanique améliorées, à partir structures ou vessies thermoplastiques de la présente invention qui sont :
- des structures multicouches améliorant la tenue à l'environnement de l'EVOH et sa tenue aux chocs,
- des structures ayant une couche EVOH épaisse, c'est à dire supérieure à 500 microns, pour apporter une barrière suffisante aux gaz,
- des structures sans soudure permettant d'avoir une vessie homogène présentant une résistance mécanique et perméation uniformes,
- des structures munies d'inserts ou connectiques pendant la mise en oeuvre de la vessie, si nécessaire, ce qui permet de limiter les risques de fuite.

La présente invention a donc notamment pour objet l'utilisation de structures multicouches comprenant au moins une couche en copolymère éthylène-alcool vinylique (EVOH) défini ci-dessus pour la fabrication d'un réservoir.

La couche EVOH de la présente invention forme une excellente barrière aux gaz, même à l'hydrogène. Cette structure permet par exemple de réaliser des réservoirs destinés au stockage de gaz sous pression tels que des hydrocarbures, de l'hydrogène, de l'oxygène, etc.

Une couche épaisse d'EVOH est donc utilisée comme couche clé des structures ou vessies thermoplastiques de la présente invention pour le stockage de gaz. Le stockage peut être réalisé avec une telle structure à une pression de stockage de 10⁶ à 10⁸ Pa et même au-delà, et à une température de stockage de -50°C à +100°C. Le gain en terme de taux de fuite pour un réservoir de la présente invention est au moins de 30 par rapport aux autres polymères thermoplastiques.

Les applications de la présente invention sont donc nombreuses, et outre celles précitées, on peut par exemple citer aussi les applications réservoir H2 pour pile à combustible (PAC) dans lesquelles le réservoir peut être soumis à des températures de -40 à +60 °C et à des pressions de 200 à 600 x 10⁵ Pa.

D'autres applications encore sont toutes celles qui utilisent les propriétés et avantages précités de la structure de la présente invention.

D'autres caractéristiques et avantages de la présente invention apparaîtront encore à la lecture des exemples ci-dessous donnés à titre illustratif et non limitatif, en référence aux dessins annexés.

### Figures

- La figure 1 est un graphique de l'évolution de la température d'un capteur de température placé à l'extérieur du moule de rotomoulage et de la température de l'atmosphère à l'intérieur du four de rotomoulage en fonction du temps en minutes au cours de la fabrication d'une structure de révolution tricouche polyamide PA12 1mm/éthylène-alcool vinylique 2mm/polyéthylène greffe 1mm, selon la présente invention,
- La figure 2 est un graphique mettant en évidence la perméation du gaz hélium à 60°C à travers différents polymères thermoplastiques de 2 mm d'épaisseur dont EVOH de la présente invention, et
- La figure 3 est une représentation schématique d'un réservoir selon la présente invention.

### Exemples

### Exemple 1

Un tricouche thermoplastique constitué d'une couche de 1 mm d'épaisseur de polyamide 12 (PA 12) RISLAN (marque commerciale), de grade commercial ARVO 950 TLD fabriqué par la société TOTAL-FINA-ELF, d'une couche de copolymère éthylène-alcool vinylique (EVOH) SOARNOL (marque commerciale), de grade commercial D 2908 fabriqué par la société NIPPON GOHSEI de 2 mm d'épaisseur et d'une couche de polyéthylène greffé (PE greffé) OREVAC (marque commerciale), de grade commercial 18350 P fabriqué par la société TOTAL-FINA-ELF de 1 mm d'épaisseur a été utilisée comme vessie étanche pour un réservoir pour le stockage de l'hydrogène à 60°C et sous 350 bars.

La vessie a été fabriquée par rotomoulage. Les températures de fusion théoriques de ces trois thermoplastiques sont respectivement les suivantes : T_{PA12}=170°C, T_{EVOH}=180°C, T_{PEgreffé}=130°C.

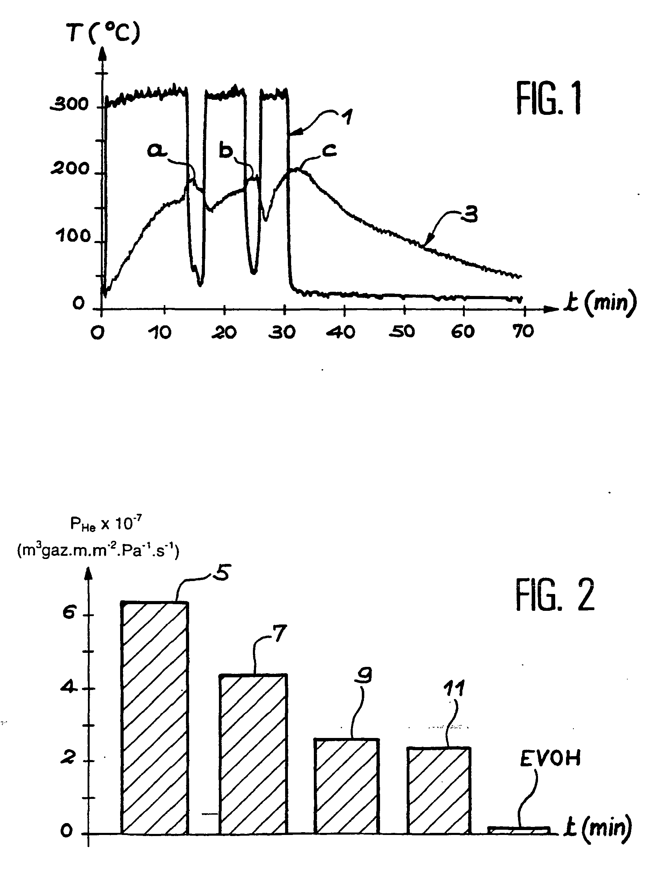

Les principaux paramètres en termes de temps et de température de cycle de rotomoulage utilisés sont explicités sur la figure 1 annexée. Il s'agit d'une représentation graphique de l'évolution de la température d'un capteur de température placé à l'extérieur du moule de rotomoulage, courbe 1, et de la température de l'atmosphère à l'intérieur du four de rotomoulage, courbe 3, en °C en fonction du temps en minutes au cours de la fabrication de la structure selon la présente invention. Sur cette figure, les élévations de température a), b) et c) correspondent respectivement aux première, deuxième (EVOH) et troisième couches de polymères thermoplastiques.

Les températures successives de mise en oeuvre des couches sont 180°C, 190°C et 200°C. Bien que la première couche en PA12 soit refondue à 200°C, il n'y a pas d'interpénétration avec la couche en EVOH car celle-ci bien qu'également fondue, reste très visqueuse à 200°C en forte épaisseur. Bien que la température de fusion du PE greffé soit autour de 130°C, il est nécessaire de le mettre en oeuvre à haute température, c'est à dire à une température supérieure à 180°C, ici de 200°C, pour éliminer les bulles formées.

La vessie est renforcée lors de sa fabrication par un composite de fils de carbone imprégnés de résine époxyde réticulée thermiquement.

L'adhésion chimique entre les trois couches de matériau thermoplastiques est due au choix de trois polymères polaires ce qui induit une bonne tenue mécanique de l'ensemble.

Les granulés de EVOH ont été préalablement micronisés au moyen d'un appareil de type WEDCO (marque de commerce) en poudre de 400 microns qui a ensuite été séchée.

La rotomouleuse utilisée est de type CACCIA (marque de commerce) munie d'un four à gaz et du logiciel ROTOLOG (marque déposée). Le moule utilisé est en aluminium dont la surface interne est recouverte de Téflon (marque déposée). La vitesse de rotation biaxiale de la rotomouleuse est de 5,4 tours/minute pour l'arbre primaire et de 7,3 tours/minute pour l'arbre secondaire.

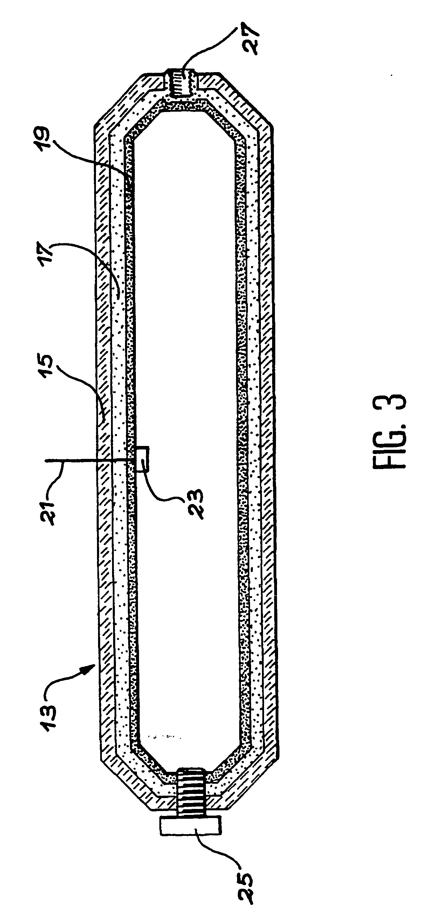

Le réservoir obtenu est schématisé sur la figure 3 annexée. Sur cette figure, le réservoir 13 est constitué du tricouche rotomoulé précité : une couche de polyamide extérieure référencée 15, une couche de copolymère éthylène-alcool vinylique référencée 17, et une couche de polyéthylène greffé référencée 19. Il comprend en outre un connecteur de type capteur de pression 21 relié à un capteur 23, un insert de type bouchon 25, et un insert de type pas de vis métallique ou poignée 27.

Le réservoir fabriqué a une forme de cigare d'une longueur de 1 m environ et d'un rayon interne de 100 mm environ. Le volume interne est de 35 litres et la surface interne développée est de 0,75 m².

Le taux de fuite annuel, par perméation naturelle du gaz à travers la vessie multicouches du réservoir est inférieur à 5% en volume par rapport au volume de gaz détendu, c'est à dire dans les conditions normales de température et de pression.

### Exemple 2

Le même procédé que celui exposé dans l'exemple 1 a été utilisé pour fabriquer un tricouche thermoplastique ayant la même géométrie que dans l'exemple 1 mais constitué d'une couche de 0,5 mm d'épaisseur de polyamide 12 (PA 12) RISLAN (marque commerciale), de grade commercial ARVO 950 TLD fabriqué par la société TOTAL-FINA-ELF, d'une couche de copolymère éthylène-alcool vinylique (EVOH) SOARNOL (marque commerciale), de grade commercial D 2908 fabriqué par la société NIPPON GOHSEI de 3 mm d'épaisseur et d'une couche de polyamide 12 (PA 12) RISLAN (marque commerciale), de grade commercial ARVO 950 TLD fabriqué par la société TOTAL-FINA-ELF de 0,5 mm d'épaisseur.

Ce tricouche a été utilisé comme vessie étanche pour un réservoir tel que celui schématisé sur la figure 3 destiné au stockage d'hélium à 25°C et sous 350 bars.

Le taux de fuite annuel, par perméation naturelle du gaz à travers la vessie multicouches du réservoir obtenu est inférieur à 1% en volume par rapport au volume de gaz détendu, c'est à dire dans les conditions normales de température et de pression.

### Exemple 3

Le même procédé que celui exposé dans les exemples 1 et 2 a été utilisé pour réaliser un tricouche thermoplastique ayant la même forme que dans les exemples 1 et 2, mais constitué d'une couche de 0,7 mm d'épaisseur de polyéthylène greffé (PE greffé) OREVAC (marque commerciale), de grade commercial 18350P fabriqué par la société TOTAL-FINA-ELF, d'une couche de 2 mm d'épaisseur de copolymère éthylène-alcool vinylique (EVOH) SOARNOL (marque commerciale) de grade commercial D2908 fabriqué par la société TOTAL-FINA-ELF et d'une couche de 0,7 mm d'épaisseur de polyéthylène greffé (PE greffé) OREVAC (marque commerciale), de grade commercial 18350P fabriqué par la société TOTAL-FINA-ELF.

Ce tricouche a été utilisé comme vessie étanche pour un réservoir tel que celui schématisé sur la figure 3, destiné aux stockages d'hydrogène de -40°C à +60°C et sous 700 bars.

Le taux de fuite, par perméation naturelle du gaz à travers la vessie multicouche est inférieur à 1 cm³ de gaz par litre de réservoir et par heure, pour une pression de 700 bars et pour une température ambiante.

### Exemple comparatif 1

La figure 2 est un graphique mettant en évidence la perméation du gaz hélium P_{He}x 10⁻¹⁷ (m³gaz.m.m⁻².Pa⁻¹ ·s⁻¹) à 60°C à travers différents polymères thermoplastiques de 2 mm d'épaisseur, dont EVOH de la présente invention.

Sur cette figure, les références suivantes indiquent les polymères suivants :

| | |
|---|---|
| 5 | : polyéthylène basse densité (PEBD) |
| 7 | : polyamide 12 (PA12) |
| 9 | : polyfluorure de vinylidène (PVDF) |
| 11 | : polyéthylène réticulé (XLDPE) |
| EVOH | :copolymère éthylène-alcool vinylique(EVOH) |

Parmi les polymères thermoplastiques étudiés, EVOH présente incontestablement les meilleures propriétés barrières aux gaz.

## Revendications

1. Structure thermoplastique multicouches comprenant au moins une couche constituée d'un copolymère éthylène-alcool vinylique comprenant 29% en mole d'éthylène, ledit copolymère ayant une masse volumique de 1,21 g/cm³ et un indice de fluidité de 4 g/10 minutes à une température de 190°C avec une charge de 2,16 kg, dans laquelle la couche constituée dudit copolymère éthylène-alcool vinylique a une épaisseur comprise entre 0,3 et 20 mm.

2. Structure selon la revendication 1, dans laquelle la couche constituée dudit copolymère éthylène-alcool vinylique a une épaisseur comprise entre 0,5 et 5 mm.

3. Structure selon la revendication 1, comprenant en outre au moins une couche constituée d'un matériau thermoplastique différent dudit copolymère éthylène-alcool vinylique et choisi dans un groupe comprenant un polyéthylène, un polyéthylène greffé, un polyéthylène téréphtalate, un polycarbonate, un copolymère éthylène acétate de vinyle, un polyfluorure de vinylidène, un polyester amide, un polyamide ou un mélange de ceux-ci.

4. Structure selon la revendication 3, dans laquelle la couche du matériau thermoplastique différent dudit copolymère éthylène-alcool vinylique a une épaisseur comprise entre 0,1 et 10 mm.

5. Structure selon la revendication 3, dans laquelle la couche de matériau thermoplastique différent dudit copolymère éthylène-alcool vinylique a une épaisseur comprise entre 0,1 et 5 mm.

6. Structure selon la revendication 3, dans laquelle la couche constituée d'un matériau thermoplastique différent dudit copolymère éthylène-alcool vinylique comprend dans le matériau thermoplastique qui la constitue une charge organique ou minérale.

7. Structure selon la revendication 3, comprenant au moins une première et une deuxième couches constituées respectivement d'un premier et d'un deuxième matériaux thermoplastiques identiques ou différents et différents d'un copolymère éthylène-alcool vinylique, ladite structure comprenant successivement la première couche de matériau thermoplastique, la couche constituée du copolymère éthylène-alcool vinylique, et la deuxième couche de matériau thermoplastique.

8. Structure selon la revendication 7, dans laquelle la première couche est constituée de polyamide et la deuxième couche est constituée de polyéthylène greffé ou non.

9. Structure selon la revendication 7, dans laquelle la première et la deuxième couches sont constituées d'un polyamide identique ou différent.

10. Structure selon la revendication 1, ladite structure étant renforcée par un composite de fils de carbone imprégnés de résine époxyde réticulée thermiquement.

11. Structure selon l'une quelconque des revendications précédentes obtenue par rotomoulage.

12. Utilisation d'une structure selon l'une quelconque des revendications précédentes pour la fabrication d'un réservoir.

13. Utilisation d'une structure selon l'une quelconque des revendications précédentes pour la fabrication d'un réservoir à hydrogène.

14. Réservoir comprenant une structure selon l'une quelconque des revendications précédentes.

## Claims

1. Multi-layer thermoplastic structure comprising at least one layer composed of an ethylene-vinyl alcohol copolymer comprising 29 mole % ethylene, said copolymer having a density of 1.21 g/cm³, and a melt flow index of 4 g/10 minutes at a temperature of 190°C with a charge of 2.16 kg, in which the layer composed of the said ethylene-vinyl alcohol polymer is between 0.3 and 20 mm thick.

2. Structure according to claim 1, in which the thickness of the layer composed of the said ethylene-vinyl alcohol copolymer is between 0.5 and 5 mm.

3. Structure according to claim 1, comprising at least one layer made of a thermoplastic material other than the ethylene-vinyl alcohol copolymer, and chosen in a group comprising a polyethylene, a grafted polyethylene, a polyethylene terephthalate, a polycarbonate, an ethylene-vinyl copolymer, a polyvinylidene fluoride, an amide polyester, a polyamide, or a mix of these thermoplastic materials.

4. Structure according to claim 3, in which the layer of thermoplastic material other than the said ethylene-vinyl alcohol copolymer is between 0.1 and 10 mm thick.

5. Structure according to claim 3, in which the layer of thermoplastic material other than the said ethylene-vinyl alcohol copolymer is between 0.1 and 5 mm thick.

6. Structure according to claim 3, in which an organic or mineral filler is added to the thermoplastic material that forms the layer composed of a thermoplastic material other than the said ethylene-vinyl alcohol copolymer.

7. Structure according to claim 3, comprising at least a first layer and a second layer composed of a first and second thermoplastic materials that may be identical or different, and other than an ethylene-vinyl alcohol copolymer, the said structure comprising in sequence the first layer of thermoplastic material, the layer composed of an ethylene-vinyl alcohol copolymer, and the second layer of thermoplastic material.

8. Structure according to claim 7, in which the first layer is composed of a polyamide and the second layer is composed of a grafted or ungrafted polyethylene.

9. Structure according to claim 7, in which the first and second layers are composed of an identical or different polyamide.

10. Structure according to claim 1, the said structure being reinforced by a composite of carbon wires impregnated with thermally crosslinked epoxy resin.

11. Structure according to any one of the preceding claims, obtained by rotation moulding.

12. Use of a structure according to any of the preceding claims for making a tank.

13. Use of a structure according to any of the preceding claims for making a hydrogen tank.

14. Tank comprising a structure according to any one of the preceding claims.

## Patentansprüche

1. Thermoplastische Mehrschichten-Struktur, die mindestens eine Schicht, bestehend aus einem Ethylen/Vinylalkohol-Copolymer mit 29 Mol-% Ethylen umfasst, wobei das genannte Copolymer eine Dichte von 1,21 g/cm³ und einen Fließfähigkeitsindex von 4 g/10 min bei einer Temperatur von 190°C unter einer Belastung von 2,16 kg aufweist, in der die Schicht, die aus dem genannten Ethylen/Vinylalkohol-Copolymer besteht, eine Dicke zwischen 0,3 und 20 mm hat.

2. Struktur nach Anspruch 1, in der die Schicht, die aus dem genannten Ethylen/Vinylalkohol-Copolymar besteht, eine Dicke zwischen 0,5 und 5 mm hat.

3. Struktur nach Anspruch 1, die außerdem mindestens eine Schicht aus einem von dem genannten Ethylen/Vinylalkohol-Copolymer verschiedenen thermoplastischen Material umfasst, das ausgewählt ist aus einer Gruppe, die umfasst ein Polyethylen, ein aufge- bzw. bepfropftes Polyethylen, ein Polyethylenterephthalat, ein Polycarbonat, ein Ethylen/Vinylacetat-Copolymer, ein Polyvinylidenfluorid, ein Polyesteramid, ein Polyamid oder eine Mischung davon.

4. Struktur nach Anspruch 3, in der die Schicht aus dem von dem genannten Ethylen/Vinylalkohol-Copolymer verschiedenen thermoplastischen Material eine Dicke zwischen 0,1 und 10 mm hat.

5. Struktur nach Anspruch 3, in der die Schicht aus dem von dem genannten Ethylen/Vinylalkohol-Copolymer verschiedenen thermoplastischen Material eine Dicke zwischen 0,1 und 5 mm hat.

6. Struktur nach Anspruch 3, in der die Schicht, die besteht aus einem von dem genannten Ethylen/Vinylalkohol-Copolymer verschiedenen thermoplastischen Material, in dem thermoplastischen Material, das sie aufbaut, einen organischen oder mineralischen Füllstoff enthält.

7. Struktur nach Anspruch 3, die mindestens eine erste Schicht und eine zweite Schicht umfasst, die jeweils bestehen aus einem ersten und einem zweiten gleichen oder unterschiedlichen thermoplastischen Material, das verschieden ist von einem Ethylen/Vinylalkohol-Copolymer, wobei die genannte Struktur aufeinanderfolgend umfasst die erste Schicht aus einem thermoplastischen Material, die Schicht aus dem Ethylen/Vinylalkohol-Copolymer und die zweite Schicht aus einem thermoplastischen Material.

8. Struktur nach Anspruch 7, in der die erste Schicht aus Polyamid besteht und die zweite Schicht aus aufge- bzw. bepfropftem oder nicht aufge- bzw. bepfropftem Polyethylen besteht.

9. Struktur nach Anspruch 7, in der die erste Schicht und die zweite Schicht aus einem gleichen oder unterschiedlichen Polyamid bestehen.

10. Struktur nach Anspruch 1, die verstärkt ist durch einen Verbundwerkstoff aus Carbonfasern, die mit einem thermisch vernetzten Epoxidharz imprägniert sind.

11. Struktur nach einem der vorhergehenden Ansprüche, die durch Rotationsformen erhältlich ist.

12. Verwendung einer Struktur nach einem der vorhergehenden Ansprüche für die Herstellung eines Reservoirs (Behälters).

13. Verwendung einer Struktur nach einem der vorhergehenden Ansprüche für die Herstellung eines Wasserstoff-Reservoirs (-Behälters).

14. Reservoir (Behälters), das (der) eine Struktur nach einem der vorhergehenden Ansprüche umfasst.
